# EUROPEAN PATENT APPLICATION

(11) **EP 3 065 067 A1**
(43) Date of publication of application: **07.09.2016**
(21) Application number: 15158085.9
(22) Date of filing: 06.03.2015
(51) Int. Cl.: G06F 17/30

(54) **Anonymous live image search**

(71) Applicant: Captoria Ltd, St. Albans, Hertfordshire AL1 3AW (GB)
(72) Inventor: Martin, Tom, Benfleet Essex SS7 1PW (GB); Yousef, Yaacoub, Chelmsford Essex CM2 7PP (GB); Shalaan, Izlam, Chelmsford Essex CM2 9LQ (GB)
(74) Representative: Keseris, Denis

(57) **Abstract**

The present invention provides a method and system for managing and sharing images in an anonymised and live manner such that a third party is able to search for the most recent images that meet the search criteria without being provided with any images uploaded by the proprietor in which a person is present. The system processes images uploaded to a database, marking them as public or private based on the content of the image, and provides an information retrieval system enabling a third party to search through the images marked as public, wherein the third party is presented with the images most recently captured that fulfil the search criteria.

## Description

### Technical Field

The present invention relates to a system and method of live image search. In particular, the present invention relates to an algorithm used to curate an image database to provide an image search platform that is both live and anonymous.

### Background to the Invention and Prior Art

Image management applications for storing and sharing digital images are a commonly known type of software application. Such software may be used to publicly share digital images whereby a third party may search key words and be provided with images associated with the key words based on information provided by the proprietor of the image. For example, the proprietor may input information about the location of the image, events occurring within the image, or any other information relevant to the specific image. In this respect, the images provided are usually those that have been associated with particularly popular key words and are not necessarily the most recently uploaded images.

Furthermore, any curation of such image databases must be performed by the user, and not by the application itself. That is to say, should the user wish to keep particular images private, for example, images that clearly show the faces of people, they must specify that said images must not be shared publicly. Consequently, image management applications known in the art do not provide a system that automatically anonymises the images within its database such that only images without people are made available to the public, and that provides a search which produces the most recent and up to date images relevant to the search criteria, that is, a live search.

### Summary of Invention

Embodiments of the present invention solve the above noted problems by providing a system and method for managing and sharing images in an anonymised and live manner. The present invention processes images to remove those with faces in them, and then enables third party users to search and view the remaining images in chronological order such that they are able to view the most recently captured images relevant to their search. Such a system may be of particular use to people wishing to keep up to date with current affairs, for example, journalists looking for images of an event taking place at a particular location at that immediate moment.

The present invention comprises two stages; an image processing stage and a search and view stage. The image processing stage processes and anonymises images uploaded to its database by automatically extracting images with faces and categorising them as 'private'. Images without faces are marked as 'public', and are tagged with identifying terms. The identifying terms may correspond to information such as time and location embedded in the image's metadata, or they may relate to the content of the image as provided by the proprietor of the image, for example, a key word describing an event occurring in the image. The search and view stage enables the 'public' images to be searched and viewed by a third party user, wherein the present invention presents the third party user with the most recent images relevant to their search, that is to say, the results are displayed in chronological order from most to least recent, or vice versa if required. In this respect, the third party user is able to view effectively 'live' images relevant to their search. For example, a third party user may search a particular geographical location such as Trafalgar Square. The present invention will then search for all images associated with the term 'Trafalgar Square' and display them in chronological order based on the time it was captured, such that the most recent image is displayed first. In this respect, the third party user may be able to see images of Trafalgar Square that have been taken just moments before.

In order to solve the problems associated with prior art systems, the present invention provides an image processing method comprising the steps of:
receiving at least one image file from a client application;
analysing the at least one image file to determine whether the image includes at least one predetermined visual feature;
if the image includes the at least one predetermined visual feature, assigning the image file to a first group of images; and
if the image does not include the at least one predetermined visual feature, assigning the image file to a first group of images.

The images assigned to first group of images may be accessible by a first group of client applications, and images assigned to the second group of images may be accessible by the first group of client applications and a second group of client applications.

In some embodiments, the step of receiving comprises storing the at least one image file in a first database. The step of receiving may further comprise receiving instructions from the client application to label the image file with at least one identifying term, wherein the identifying term may be based on at least one of the geographical location where the image was captured, the time at which the image was captured and the visual content of the image.

According to further embodiments, the step of analysing the at least one image file further comprises inputting the image file to a face detection application programming interface (API). The predetermined visual feature may include at least one of an eye, a nose, an ear and/or a mouth.

In another embodiment, the step of analysing the at least one image file further comprises extracting metadata information embedded in the image file, wherein the metadata information may include at least one of the geographical location where the image was captured and the time at which the image was captured.

In other embodiments, the step of analysing the at least one image further comprises inputting the image file to a content detection application programming interface (API). The step of analysing the at least one image may further comprise inputting the image file to a resolution application programming interface (API).

In one embodiment, the step of processing the image file to allow it to be accessed by a first group of client applications comprises labelling the image file as private and storing the image file in the first database. The step of processing the image file to allow it to be accessed by a first group of client applications may further comprise storing the image in a second database accessible to the first group of client applications. The first group of client applications may include the client being used by the proprietor of the image.

In another embodiment, the step of processing the image file to allow it to be accessed by a second group of client applications comprises labelling the image file as public and storing the image file in the first database. The step of processing the image file to allow it to be accessed by a second group of client applications may further comprise storing the image in a third database accessible to the second group of client applications. The second group of client applications may include the client application being used by the proprietor of the image and any other client applications being used by third parties.

According to some embodiments of the claimed invention, the method further comprises the steps of:
receiving instructions from the second group of client applications to search the images that do not include the at least one predetermined visual feature, wherein the instructions comprise at least one search criterion; and
displaying at least one image to the second group of client applications based on the received instructions.

The search criterion may include at least one of a geographical location, a time frame, an event and/or an object. The method may further comprise displaying the at least one image to the second group of client applications in a chronological order, wherein the chronological order is based on the date and time at which the image file was captured.

The present invention also provides an image processing system comprising:
at least one client application running on a data processing device;
a processor; and
a computer readable medium storing one or more instruction(s) arranged such that when executed the processor is caused to perform the steps of:
   (i) receive at least one image file from the client application;
   (ii) analyse the at least one image file to determine whether the image includes at least one predetermined visual feature;
   (iii) if the image includes the at least one predetermined visual feature, assigning the image file to a first group of images; and
   (iv) if the image does not include the at least one predetermined visual feature, assigning the image file to a first group of images.

The first group of images may be accessed by a first group of client applications, and the second group of images may be accessed by the first group of client applications and a second group of client applications.

According to embodiments of the present invention, receiving the at least one image file includes storing the at least one image file in a first database.

In some embodiments, the processor is further arranged to receive instructions from the client application to label the at least one image file with at least one identifying term. The identifying term may be based on at least one of the geographical location where the image was captured, the time at which the image was captured and the visual content of the image.

In one embodiment, the step of analysing the at least one image file comprises inputting the image file to a face detection application programming interface (API). The predetermined visual feature may include at least one of an eye, a nose, an ear and/or a mouth.

According to some embodiments, the step of analysing the at least one image file further comprises extracting the metadata information embedded in the image file. The metadata information may include at least one of the geographical location where the image was captured and the time at which the image was captured.

In other embodiments, the step of analysing the at least one image further comprises inputting the image file to a content detection application programming interface (API). The step of analysing the at least one image may further comprise inputting the image file to a resolution application programming interface (API).

According to one embodiment, the step of processing the image file to allow it to be accessed by a first group of client applications comprises labelling the image file as private and storing the image file in the first database. The step of processing the image file to allow it to be accessed by a first group of client applications may further comprise storing the image in a second database accessible to the first group of client applications. The first group of client applications may include the client application being used by the proprietor of the image.

In another embodiment, the step of processing the image file to allow it to be accessed by a second group of client applications comprises labelling the image file as public and storing the image file in the first database. The step of processing the image file to allow it to be accessed by a second group of client applications may further comprise storing the image in a third database accessible to the second group of client applications. The second group of client applications may include the client application being used by the proprietor of the image and any other client applications being used by third parties.

In some embodiments, the processor is further arranged to analyse at least one image file in response to a member of the second group of client applications accessing the first, second or third database.

In other embodiments, the processor is further arranged such that analysis of at least one image is initiated in response to a request from a client application. A request may include any interaction between a client application and the system, for example, a client application may request to search the image files, the request initiating a Linux "Cron job" that sends an unprocessed image to a face detection API for processing. Alternatively, a request may include uploading an image file, viewing an image file or any other client application activity within the system

In embodiments of the present invention, the processor is arranged to analyse at least one image file periodically. For example, the processor may be arranged to initiate a Cron job once every minute, wherein the Cron job is arranged to call a face detection API to process the image. The processor may be further arranged such that it analyses at least one image every second.

According to some embodiments, the processor is further arranged to perform the steps of:
receive instructions from the second group of client applications to search the images that do not include the at least one predetermined visual feature, wherein the instructions comprise at least one search criterion; and
display at least one image to the second group of client applications based on the received instructions.

The search criterion may include at least one of a geographical location, a time frame, an event and/or an object.

The processor may be further arranged to display the at least one image to the second group of client applications in a chronological order, wherein the chronological order may be based on the date and time at which the image file was captured.

The present invention further provides an image processing method comprising the steps of:
receiving at least one image file from a client application;
analysing the at least one image file to determine whether the image includes at least one predetermined visual feature;
if the image includes the at least one predetermined visual feature, processing the image file to allow it to be accessed by a first group of client applications; and
if the image does not include the at least one predetermined visual feature, processing the image file to allow it to be accessed by a second group of client applications.

### Brief Description of the Drawings

The present invention will now be described by way of example only, and with reference to the accompanying drawings in which:
Figure 1 is a flow diagram illustrating the steps of the image processing stage according to embodiments of the present invention;
Figure 2 is a block diagram illustrating apparatus according to the present invention;
Figure 3a is a flow diagram illustrating the steps of the search and view stage of the present invention;
Figure 3b is a flow diagram illustrating the steps of a part of the view and search stage of the present invention;
Figure 3c is a flow diagram illustrating the steps of a part of the view and search stage of the present invention;
Figures 4a-b illustrate an example of a user interface for uploading images of the present invention;
Figure 4c illustrates an example of a user interface for uploading images as displayed on a mobile phone device;
Figures 5a-b illustrate an example of a user interface for searching and viewing images of the present invention;
Figure 6 illustrates an example of a user interface for viewing a single image identified by a search of the present invention; and
Figure 7 illustrates an example of a user interface for viewing an image on a user profile.

### Detailed Description of the Drawings

The present invention provides a method and system for managing and sharing images in an anonymised and live manner such that a third party is able to search for the most recent images that meet the search criteria without being provided with any images uploaded by the proprietor in which the face of a person is present, or at least the features or characteristics of a person's face are present. The system processes images uploaded to its database, categorising them as public or private based on the content of the image, and provides an information retrieval system enabling a third party to search through the images categorised as public, wherein the third party is presented with the images most recently captured that fulfil the search criteria.

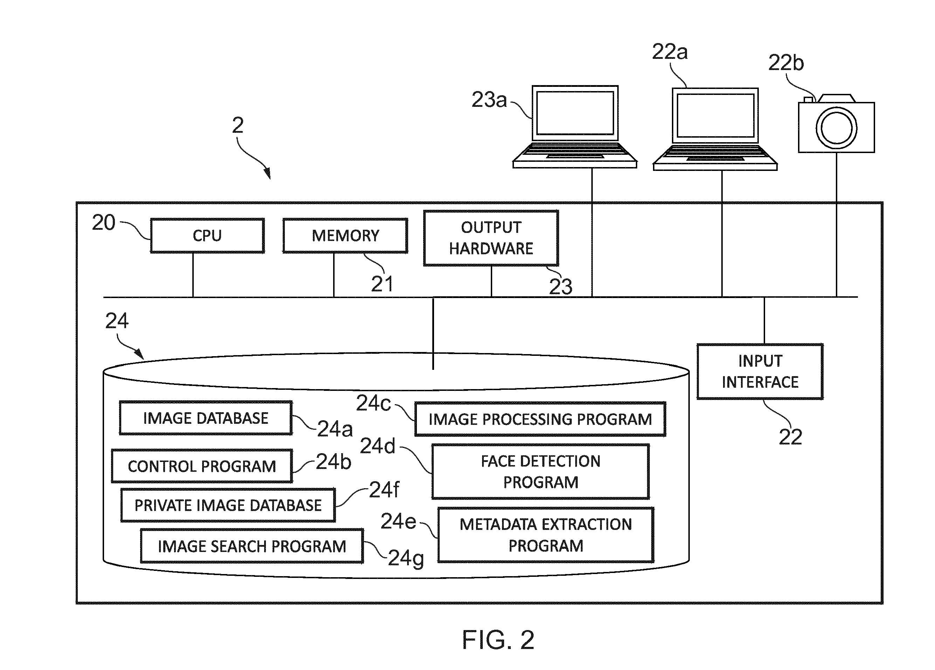

Figure 2 illustrates an example of a general computer system 2 that may form the platform for embodiments of the invention. The computer system 2 comprises a central processing unit (CPU) 20, a working memory 21, and input interface 22 arranged to receive control inputs from a user via an input device 22a such as a keyboard, mouse, or other controller, and further inputs from an image capture device 22b such as a digital camera, video camera or any other device capable of capturing an image. The computer system 2 also comprises output hardware 23 arranged to provide output information to the user or a third party via a user interface which is displayed on an output device that may include a visual display unit 23a such as a computer screen, television, mobile device or any other device capable of providing a visual display.

The computer system 2 is also provided with a computer readable storage medium 24 such as a hard disk drive (HDD), flash drive, solid state drive, or any other form of general-purpose data storage, upon which stored image data 24a, 24f and various programs are arranged to control the computer system 2 to operate in accordance with embodiments of the present invention. For example, a control program 24b may be provided and arranged to provide overall control of the system to perform the embodiments of the present invention. This control program 24b may, for example, receive user inputs and launch other programs to perform specific tasks. The other programs under the control of the control program 24b may include an image processing program 24c, a face detection programme 24d, a metadata extraction programme 24e, and an image search programme 24g.

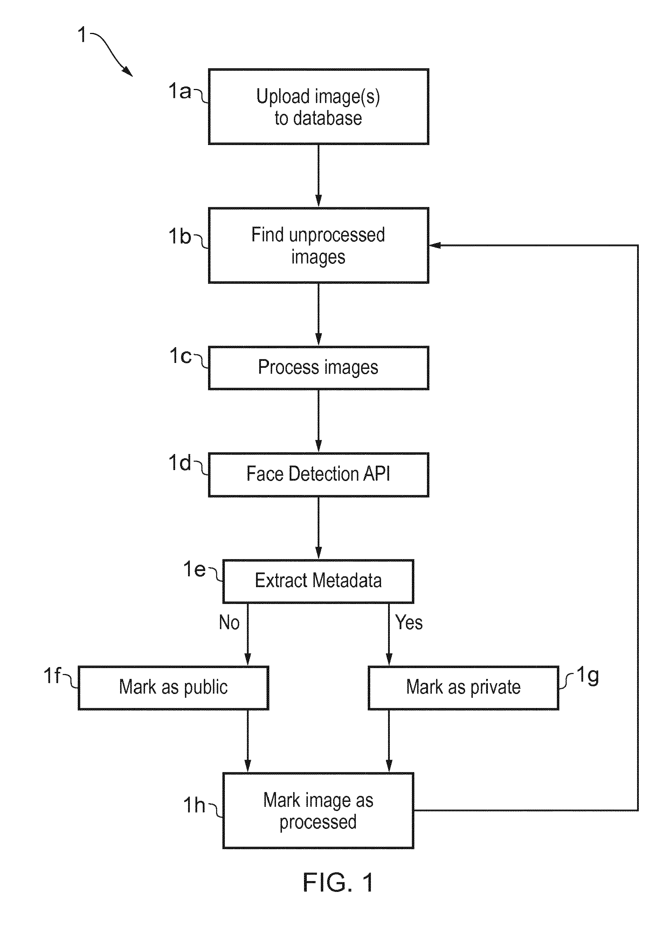

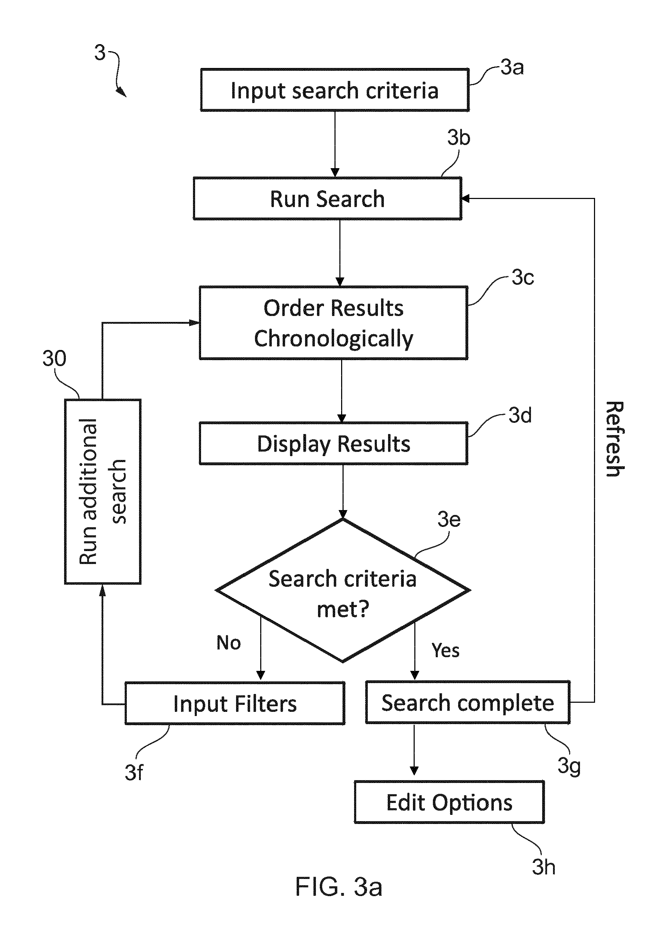

The computer system 2 is capable of performing the method and system for anonymised live image search as described by the present invention and illustrated by the steps of Figures 1 and 3a-c, which are described below by way of example.

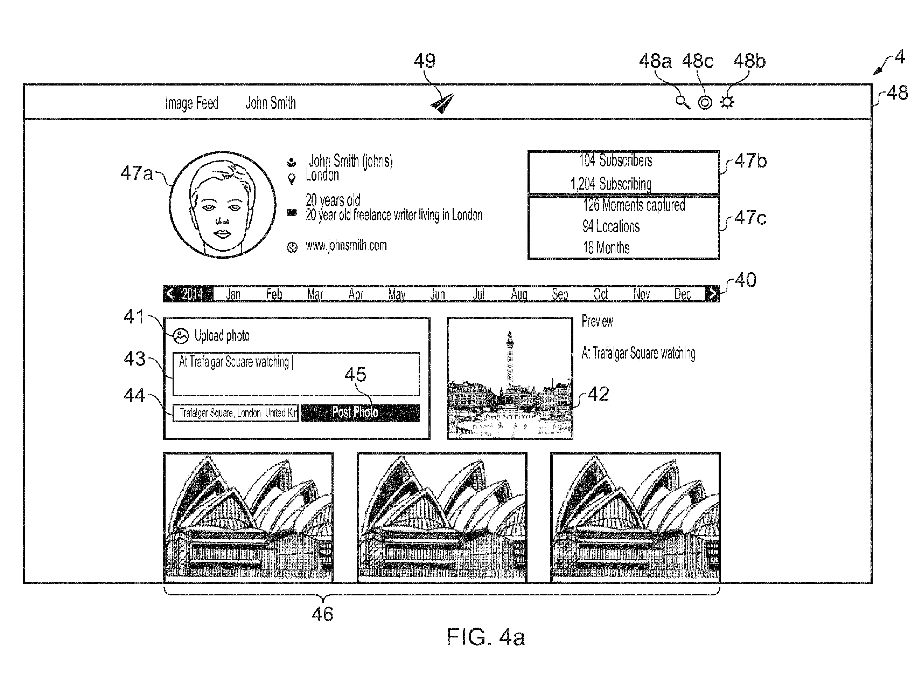

The present invention comprises two stages; an image processing stage, and a search and view stage, wherein both stages may be performed continuously and instantaneously alongside one another. Figure 1 illustrates the image processing stage 1 that may be implemented by computer system 2 to process the images uploaded to the image database 24a according to embodiments of the present invention. This image processing stage 1 starts with a user uploading an image(s) (step 1a) to the memory 21 using an input device 22a and an image capture device 22b, the user uploading the image via a user interface 4 displayed on the input device 22a, as illustrated by Figure 4a-b. The image capture device 22b may be an internal or external component of the input device 22a, for example, the camera of a mobile phone device, or a digital camera connected to a laptop via a USB cable. The uploading process (step 1a) starts when the user selects the upload icon 41 and chooses an image stored in the memory of the input device 22a or image capture device 22b. The uploaded images may be in any image file format, for example, JPEG File Interchange Format, GIF Graphics Interchange Format, TIFF Tag Image File Format, or any other standardized means for storing digital images.

The uploaded image may then be displayed to the user on their input device 22a via a preview box 42. Before saving each image to the image database 24a, the user may also tag the images with key words and information relating to the image, including but not exclusively, terms relating to the location of the image or the time at which the image was captured, or terms describing the content of the images. For example, the user may be presented with a first input box 43 in which the user can input words to describe the image. The user may also be presented with a second input box 44 in which the user can input words relating to the location that the image was taken. Alternatively, the location of the image may automatically be extracted from the Exchangeable Image File Format (EXIF) information embedded in the image and input to the second input box 44. This location information can then be converted into longitude and latitude co-ordinates using a location API or any other software suitable for identifying the longitude and latitude co-ordinates of the image's location. These longitude and latitude co-ordinates are then assigned to each image file. To complete the upload, the user selects a submit button 45, which stores the images and their associated data in the image database 24a for processing. The user may then be able to automatically view the images uploaded 46 to their user profile so that they may edit the images, for example, tag an image with further information relating to its content or location, delete an image or, optionally, organise multiple images into groups or folders. Preferably, the images 46 uploaded to their user profile are displayed in chronological order.

The user interface 4 used by the user to upload and view their images 46, as illustrated by Figures 4a-b, may also function as the user's personal profile and may include personal information relating the user 47a, for example, their name, age, location, profession, profile picture, website, email address or any other relevant information that the user is willing to share. The user interface 4 may also include data regarding the number of users they have subscribed to and the number of users subscribed to their profile, as shown by box 47b. Subscription to a user allows the subscriber to view all images uploaded by the user which may include those that have been marked as public. The subscriber may also receive updates when the user has uploaded new images, which may be presented to them visually via updates icon 49 or via electronic mail received on an electronic device, or any other suitable means of providing the subscriber with an update. For example, if new images have been uploaded by the user, the updates icon 49 may change visually by means of a change in colour, presentation of a symbol or a number indicating the number of updates. The subscriber may then select the updates icon 49 to refresh the user interface 4 and display the new images. Subscription to a user may be automatically achieved, for example, by selecting a "Subscribe" icon (not shown), without requiring permission from the user to do so. Optionally, however, the user may update their settings 48b accessed by toolbar 48 such that a subscriber must first send a request to the user who can then accept or decline the request.

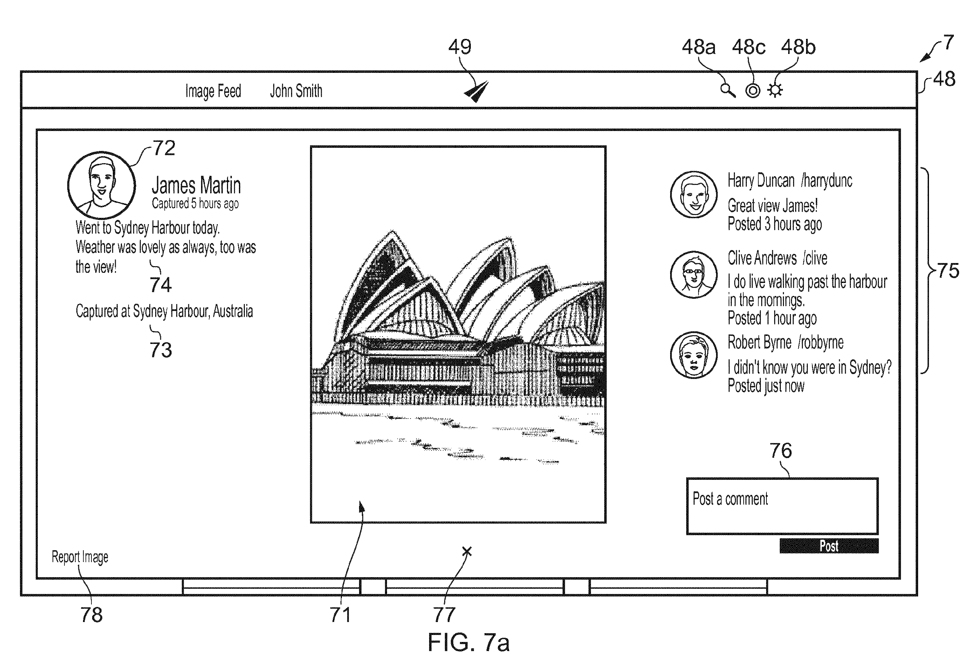

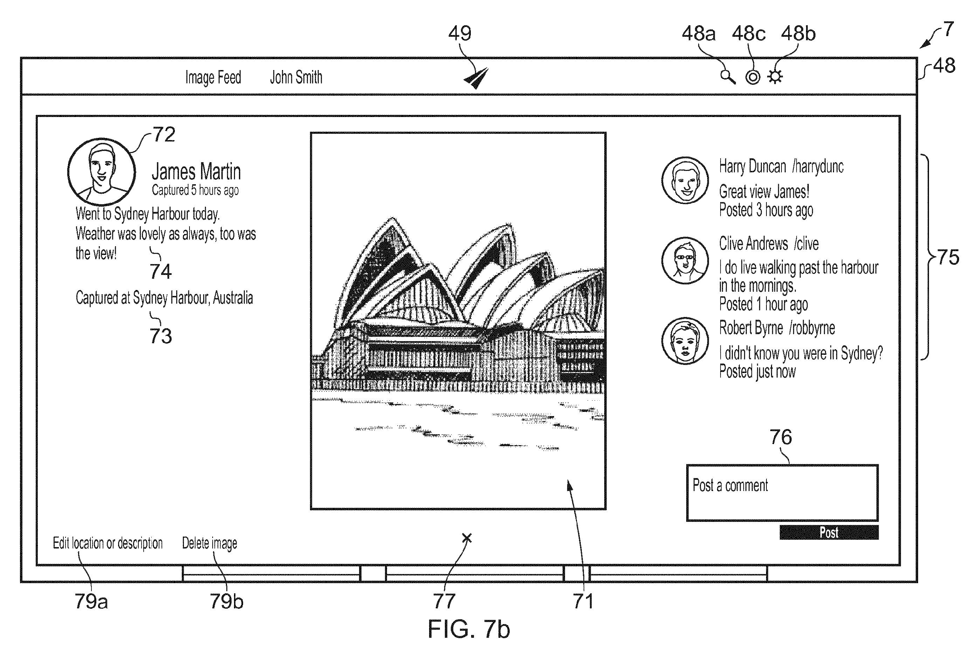

When a subscriber is viewing a user's profile, or a user is viewing their own profile, they may specify the time period for which they would like to view images using a scroll bar 40 whereby they can select a month and be presented with images that user took during the specified month. Whilst a subscriber is viewing another user's profile, or a user is viewing their own profile, the may also select an image of interest from the uploaded images 46 in order to view a full size version of the image, wherein a subscriber viewing another user's profile is illustrated by Figure 7a, and a user viewing their own image is illustrated by Figures 7b-c. Upon selection of an image, the user is presented with interface 7 which displays a larger version of the image 71. The user interface 7 may include information relating to the user, for example, their name and profile picture 72. The geographical location 73 of the image, as well as any content information 74 provided by the user upon uploading the image. For example, the user may have provided a description of what they were doing when the image was taken. The user interface 7 may also provide the option for subscribers to post comments 76 about the image 71 which may also then be displayed in a user comment section 75. The user interface 7 may include a "Report Image" option 78 should they consider the image to be adverse or offensive, selection of which sends a message to the administrator informing them that the image requires their attention and may need to be removed from the platform. Once a user has finished looking at the image 71, the subscriber can select a cancel icon 77 which will take them back to the user profile as shown by Figures 4a-b.

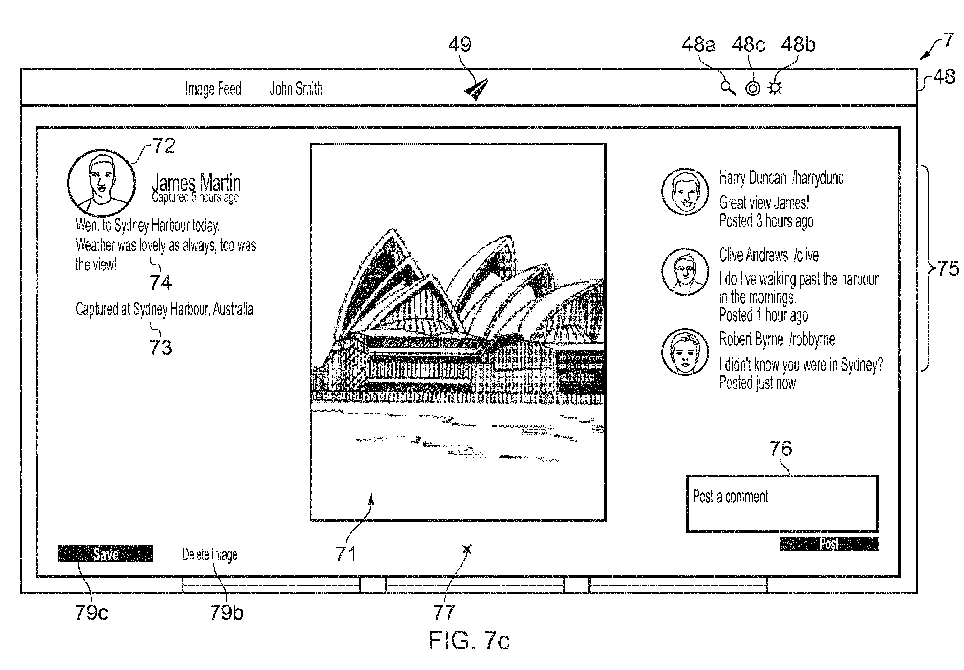

When a user is viewing their own image via user interface 7, they may be presented with a "Edit description or location" icon 79a or another suitable icon to edit the location 73 or the description 74 of the image 71, or a "Delete" icon 79b to delete the image 71 from their profile, as shown in Figure 7b. Once the user has made the desired changes to the location 73 and description 74, the user can save those changes on selection of a "Save" icon 79c, as shown in Figure 7c.

Additionally, the user interface 4 may also display data relating to a user's posting history, as shown by box 47c, which may include information such as the number of uploaded images, the number of locations their images relate to, the period of time their images span or any other information relating to their posting activities.

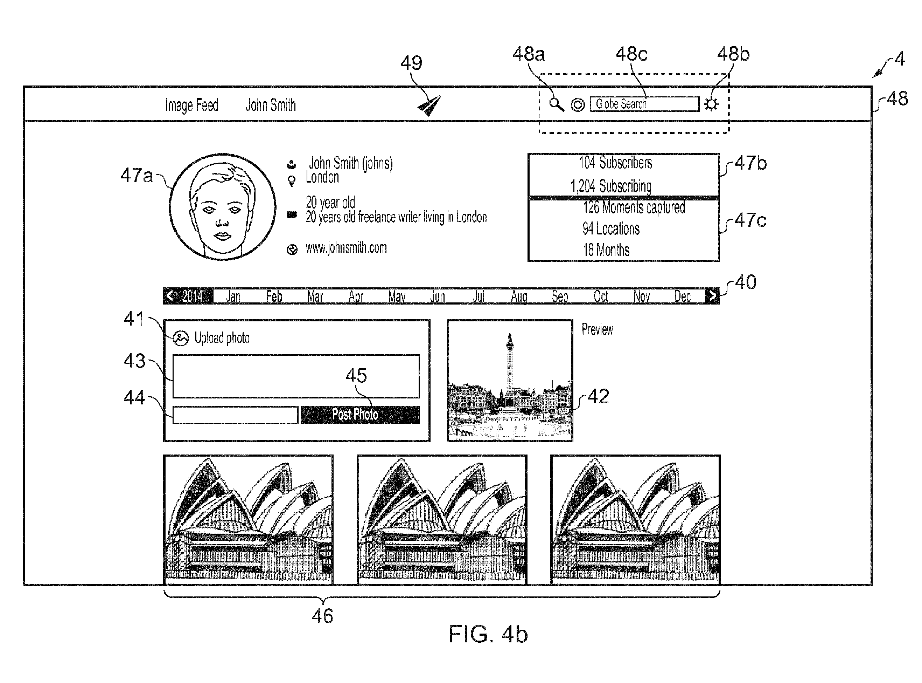

The user interface 4 also includes a toolbar 48 which includes the settings icon 48b and updates icon 49, as described above. The toolbar further includes a help icon 48a whereby the client can obtain help in using the platform and problem shoot any issues they are having. Additionally, the user may use the help icon 48a to search for other users of the platform by inputting a name or key words that may be related to that user, for example, their geographical location. The toolbar 48 also includes a search icon 48a, which upon selection transforms into an input box, as illustrated by Figure 4b. The search input box 48c may then be used to search for public images, as will be discussed in more detail below.

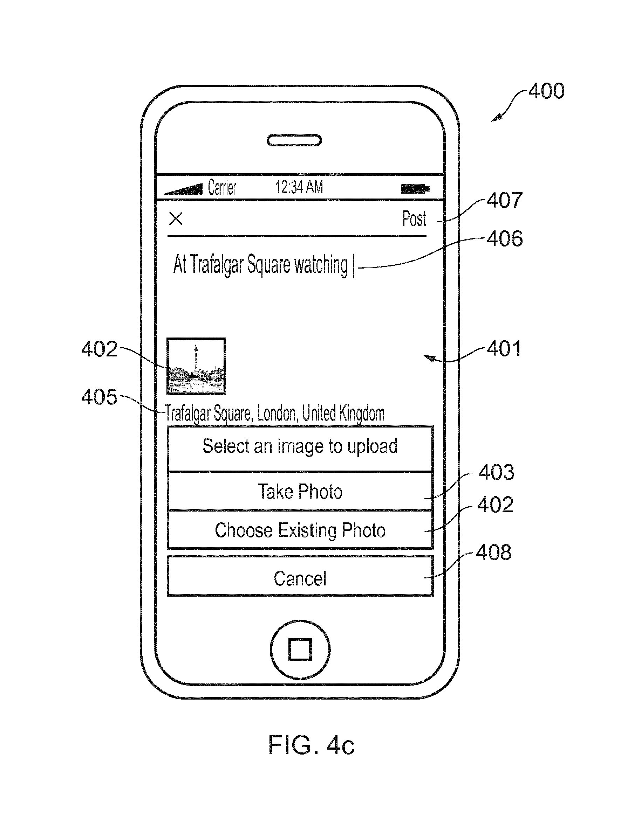

As illustrated by Figure 4c, a user may use a mobile phone device 400 to upload images via user interface 401. To upload an image, the user may select an existing image 402 from the memory of the mobile device 400 or choose to capture a new image 403 using a camera device integrated to the mobile phone device 400. Once an image has been selected or captured, the image is presented to the user as an icon 404 via user interface 401. The image may be tagged with information relating to the geographical location of the image 405, whereby this geographical information may be provided automatically via the GPRS capabilities of the mobile device 400, manually by the user or automatically extracted from the Exchangeable Image File Format (EXIF) information embedded in the image. This location information can then be converted into longitude and latitude co-ordinates using a location API or any other software suitable for identifying the longitude and latitude co-ordinates of the image's location. These longitude and latitude co-ordinates are then assigned to each image file. The user may also input information 406 regarding the content of the image, for example, for an image captured at Trafalgar Square, the user may input "At Trafalgar Square watching a brass band". The user may then upload the image to the platform by selecting "Post" 407 which sends the image and its associated data to the image database 24a for processing. The user is also presented with a "Cancel" option 408 should they decide not to upload an image to the platform.

Whilst images are being uploaded by the users of the platform, the control program 24b will launch the image processing program 24c to search for any unprocessed images (step 1b). If the image processing program 24c identifies an unprocessed image, for example, an image recently uploaded, the image processing program 24c will initiate the processing of that image (step 1b), firstly, by automatically resizing the image if required. For example, if an uploaded image has a width of over 1500 pixels, the image is preferably resized to 1000 pixels. If the image is under 1000 pixels in size there is no need to resize the image. A copy of the original image is created and stored in the image database 24a regardless of whether resizing has been necessary. The control program 24b will then launch the face detection program 24d which passes the resized image through a face detection application programming interface (API) or any other suitable face detection software (step 1d) to determine whether any faces are present in the image. If the face detection API does not detect a face, the face detection API will return a certainty value of 0, and if the face detection API does detect a face, it will return a certainty value of 1.

Preferably, the face detection software can detect faces from various angles, multiple faces in a photo simultaneously, with or without facial additions such as sunglasses or spectacles, as well as detect a range of expression and emotive characteristics, for example, the system can detect whether a person is smiling, have their eyes open or lips sealed. Preferably, the software can source the location of eyes, nose, mouth and many other facial points for each face detected, and determine the gender and age of the individuals. The system can also distinguish the faces of humans from the faces of animals such that images containing the faces of animals will produce a result of 0. The face detection API will return a value of 1 if any faces have been detected, even if the face detected has a low certainty, for example if the image is blurred. However, the face detection API will not return a value of 1 if the face detected has a certainty below a threshold value such that the detected face has a very low certainty of it actually being a face or at least a visibly recognisable face, for example, a certainty below 10%.

If the face detection API does not detect a face, the control program 24b will first launch a metadata extraction program 24e (step 1e) which will extract the metadata, that is, the embedded Exchangeable Image File Format (EXIF) information in each image file, for example, date, time and location information, or information relating to the device 22b on which the image was captured. The image processing program 24c will then mark the image as public (step 1f), or alternatively, enable the image to return to the image database 24a or another publicly available database, such that the image will be classed as searchable by a third party, preferably, a subscriber to the platform, in the search and view stage 3. The image processing program 24c will then mark the image as processed (step Ih) and then restart the processing stage 1 by searching for further unprocessed images. If the face detection API does detect a face, the control program 24b will first launch the metadata extraction program 24e to extract the EXIF information from the image which will be saved to the public image database 24a. Data may also be provided by the face detection program 24d, wherein the data relates to content of the image, for example, how many faces are in an image, the percentage certainty that person "X" is smiling, how many people in an image are female or any other information relating to the results of the face detection. The data collected by the image database 24c may be used for any number of purposes, including but not exclusively, marketing and analysis purposes.

The control program 24b will then launch the image processing program 24c to mark the image as private (step 1g) such that the image will not be searchable by a third party in the search and view stage. At this point, images marked as private may be kept in the image database 24a, or they may be moved or copied to a private database 24f which may only be accessed by the proprietor of the image, or optionally by subscribers to the user's profile, as described above. Alternatively, the image may automatically be sent to the private database 24f without being marked first. The image processing program 24c will then mark the image as processed (step Ih) and then restart the processing stage 1.

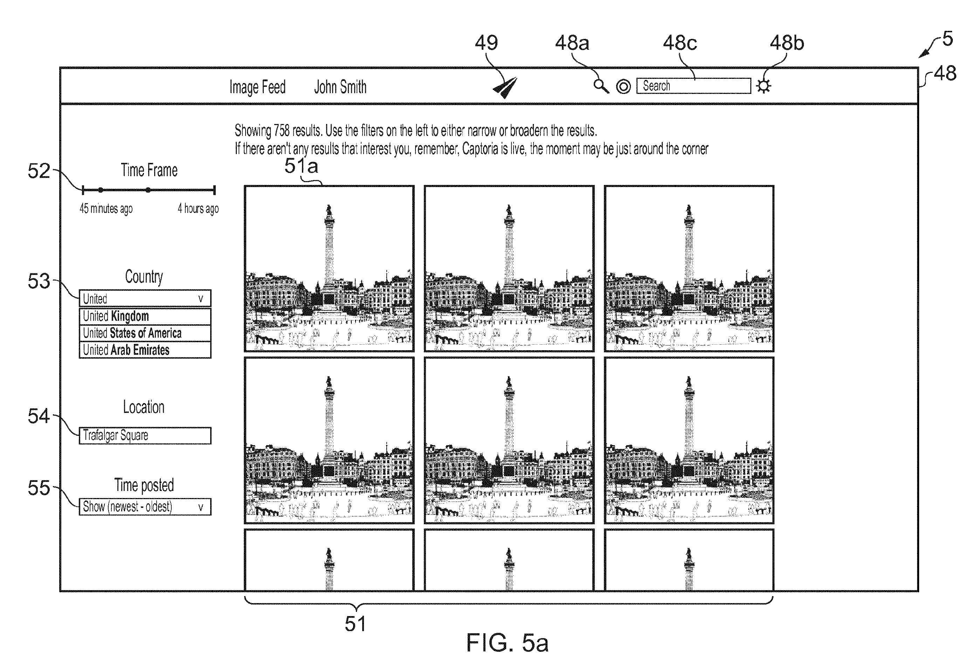

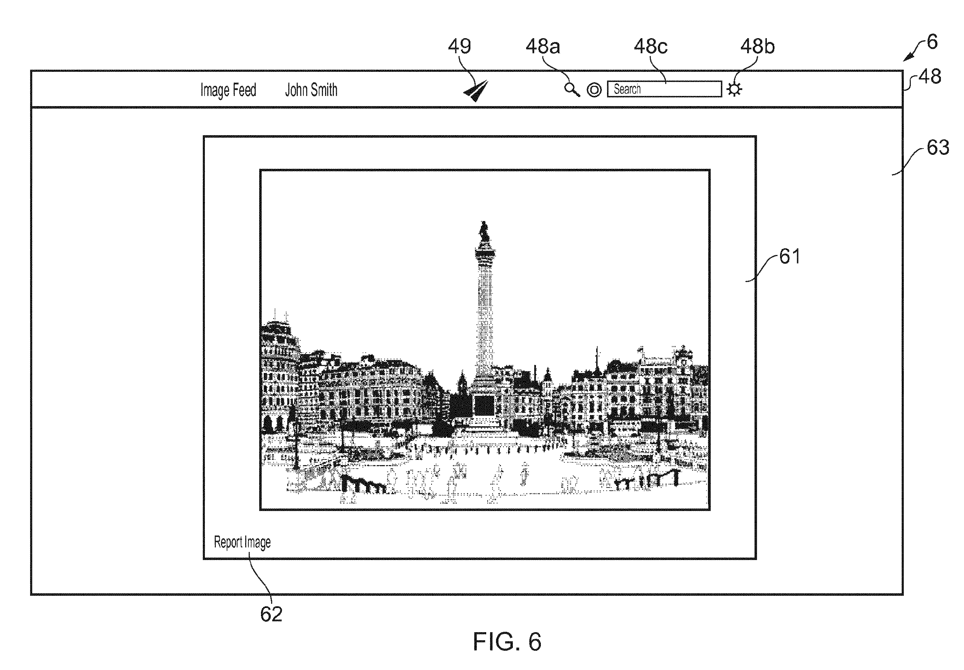

The image processing stage 1 can process any number of images at one time, although the image processing program 24c will be arranged to process one image per second for every user using the platform to search and view images. The image processing program 24c uses a time based job scheduler (e.g. a Linux Cron job) to automatically process an image every minute. In this respect, as images are uploaded to the image database 24a they are automatically placed into a private table and flagged as unprocessed. The Cron job is launched every minute, and begins by putting the images contained in the private table into a chronological order. This order may run from newest to oldest, that is, the most recently uploaded image is at the top of the list, or from oldest to newest, that is, the image which has been in the table for the longest period is at the top of the list. The Cron job then sorts through the list of images, and selects the first unprocessed image in the list. This image is then sent to the face detection API which will identify any faces in the image, as described above. The image processing program 24b will then proceed to mark the image as private (step 1g) or public (step 1f) and place the image in a public table within the image database 24a. Whilst there are no clients accessing the platform to search and view images, the Cron job will run once every minute. However, for every request received from client device, the Cron job will be prompted to run every second, that is to say, it will process an image every second for every user accessing the platform. For example, if 100 photos are uploaded in 1 second and there are 100 clients searching and viewing images, those 100 photos will be processed in 1 second; if there were 100 photos uploaded in 1 second, but there were only 50 clients searching and viewing images, then 100 photos will be processed in 2 seconds; or if there were 100 photos uploaded in 1 second, but there were 200 clients searching or viewing images, then the 100 uploaded photos will still be processed in 1 second. As such, the search and view user interfaces, as illustrated by Figures 5a-c and 6, can function as the trigger for processing an image. That is to say, every time a user accesses one of the search and view interfaces, the image processing program 24c is prompted to process an image. A request from a client device may also include accessing any other user interface described herein, uploading an image, performing a search itself, or any other client activity within the platform. Further processing of images may also be performed when a user has been editing their own images, as illustrated by Figures 7b-c, wherein those images have already been processed a first time. Upon selecting the "Save" icon 79c, the image 71 will be passed through the image processing program 24c for reprocessing.

The general computer system 2 may further comprise a content and colour detection program (not shown), which when launched by the control program 24b passes images through a content detection API or any other suitable content detection software to identify any distinguishable objects or colours that may be shown by the image. Such objects may include, but are not exclusively, animals, furniture, geographical features such as mountains or lakes, plants, tourist attractions and landmarks, vehicles, or any other identifiable shape. Upon identifying an object, the image processing program 24c may then tag the image with at least one term describing or associated with that object. For example, the object detection API may identify a Labrador dog, in which case the image processing program 24c may tag the image with the words "Labrador" and "dog". As another example, the object detection API may identify Tower Bridge, causing the image processing program 24c to tag image with words such as "Tower Bridge", "bridge", "London" and the like.

The general computer system 2 may also comprise a resolution detection program (not shown), which when launched by the control program 24b passes images through a resolution API to measure the level of resolution that the image has, including but not exclusively, measuring the pixel resolution, spatial resolution, spectral resolution or colour depth. Once the resolution has been measured, the image processing program 24c may then tag the image with those measurements. For example, the resolution API may measure a pixel resolution of 3.1 megapixels, the image processing program 24c therefore tagging the image with this measurement.

Once images have been uploaded and processed, images deemed to be public are available to be searched by a third party. Figure 3a illustrates the search and view stage 3 that may be implemented by the computer system 2 to enable a third party to search and view images marked as public in a chronological order according to embodiments of the present invention. The search and view stage 3 starts with the user inputting a search criteria (step 3a) into the input box 48c of a user interface 5 displayed to the third party user on their visual display device 23a, as illustrated by Figures 5a-b. The search criteria may include any key words that may relate to the image, for example, the geographical location of the image, an event occurring in the image or a particular object shown in the image. The user may also limit the search by setting the time frame, for example, by using a slider 52 to set the period of time for which they would like to view images. The time frame may be any length of time, that is, minutes, hours, days, months or years, such that the user is able to view any images relevant to their search criteria that were captured during this time frame. The user interface 5 may also include geographical filters 53, 54 to enable the user to limit their search to a geographical location, freeing the input box 48c for other terms relating to the desired images, such as an object or event. For example, to search baseball games occurring in New York, USA in May 2014, the user could input "baseball game" to the input box 51, "New York" to the location filter 54, "United States of America" to the country filter 53, and set the time frame slider 52 to "1 May 2014" to "31 May 2014". Additionally, the user interface 5 may include a menu 55 presenting the user with the option to change the order in which the images are presented, for example, oldest to newest. The user interface 5 may be provided with a further filter (not shown) relating to the resolution of the image, for example, the third party user may wish to narrow theirs search to images of a certain quality and so may wish to search for images that are 5 mega pixels and above.

Upon receipt of the search criteria and the instructions to search images based on this criteria, the control program launches an image search programme 24g which searches (step 3b) through the images marked public that are stored in the image database 24a. The image search programme 24g will conduct its search based primarily on the EXIF information extracted from the images by the metadata extraction program 24e, along with the words and information that the images have been tagged with upon uploading the image, or by the image processing program 24c after passing the image through the content detection API and resolution API, as described previously. When a geographical location has been searched, the image search program 24g will search for images taken within a radius of the searched location, such that any images with longitude and latitude co-ordinates within that radius will be presented to the user. For example, if the user was to search "Trafalgar Square", the image search program 24g may search for all images take within a 1 mile radius of Trafalgar Square. The size of the search radius may be predetermined by the image search program 24g, however, the user may also adjust the size of the search radius via the settings icon 48b or an additional search filter (not shown). Once the image search program 24g has identified all of the images relevant to the search criteria it puts the results into chronological order (step 3c) based on the time and date that the images were captured and displays results to the third party (step 3d) on their visual display device 23a via the user interface 5, wherein the images are displayed in a chronologically ordered list 51, for example, the most recently captured image being presented to the third party as the first result 51a.

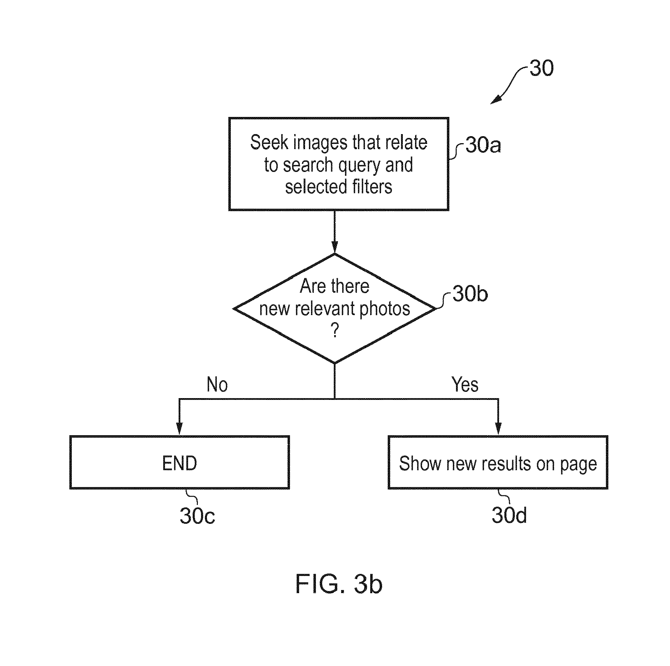

If the search criteria has not been met (step 3e), the third party user is able to narrow the search criteria by using filters 52, 53, 54 (step 3f), for example, to specify a more precise geographical location or a particular interval of time, as described previously. Once these filters have been input, the image search program 24g will perform a further search 30 as illustrated by Figure 3b and repeat display process (steps 3c-d), presenting the user with a new set of results 51. Upon receipt of the additional filters, the image search program 24g will search the image database 24a for images that meet this new search criteria (step 30a) to search for any relevant images (step 30b). If there are no new images, the search is ended (step 30c) and the images displayed at step 3d of Figure 3a remain unchanged. If there are new images identified, the user interface 5 is refreshed showing the new set of images (step 30d), which may or may not include images already presented to them at step 3d.

If the search criteria has been met (step 3e) and the third party user has found an image of interest such that their search is complete (step 3g), the third party user may then select individual images to edit, download, save, print or share (step 3h). Even once the image search programme 24g has identified and displayed images relevant to the third party user's search criteria, the image search programme 24g may continue to run the search and display process (steps 3b-3d) in real time so as to continually update the search.

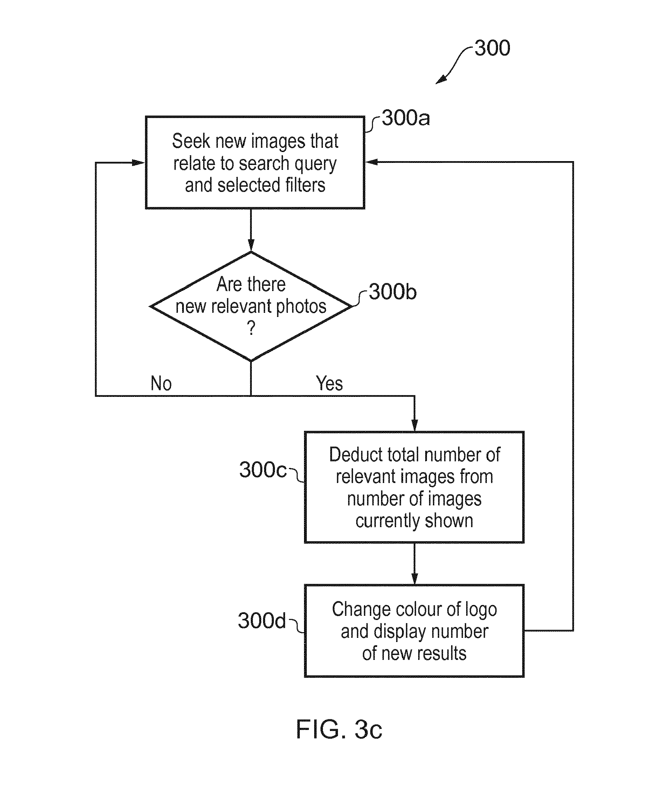

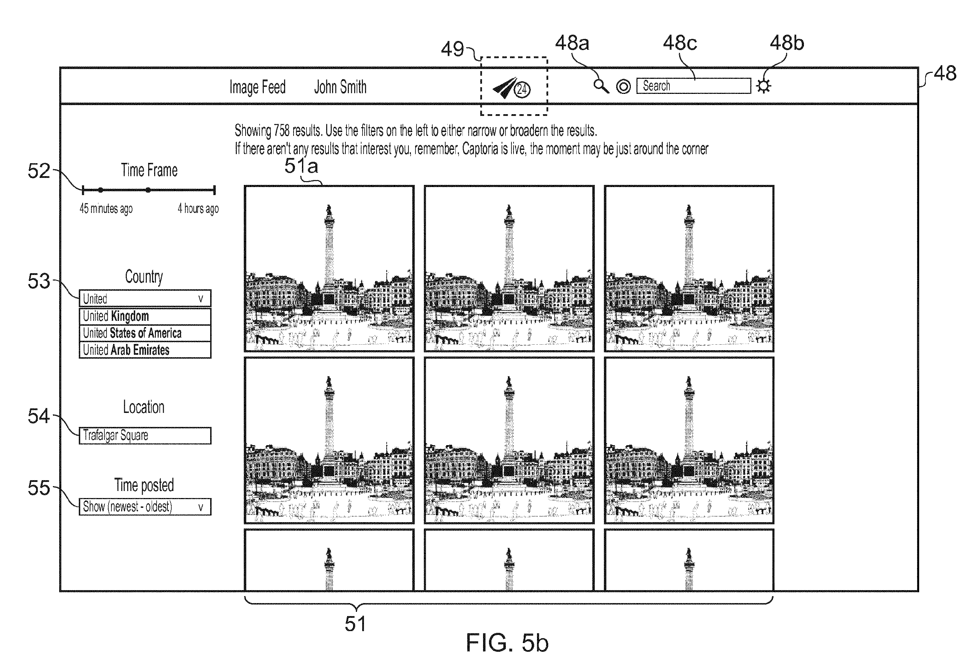

Preferably, the image processing program 24c and image search programme 24g continuously operate such that a search may be updated at least every minute with any new images that have been uploaded and are relevant to the search criteria, this additional search 300 being illustrated in more detail by Figure 3c. Preferably, the image search programme 24g will automatically perform a search (step 300a) based on the user's search criteria 3a at least every 5 seconds for the duration that the user is viewing the view and search interface 5. The image search programme 24g will identify any new results (step 300b), that is, new images that have been processed, marked as public, added to the image database 24a and found to match the search criteria. New results identified by the image search programme 24g may also include images that have been edited by the owner of the image, as shown by Figures 7b-c, the edited images being subsequently reprocessed by the image processing programme 24c and found to match the search criteria as a result of the editing. For instance, an image may have initially been tagged with an incorrect location or a location spelt incorrectly, for example, "Grenwich". Upon noticing the error, the user edits the location, for example, so that the location reads "Greenwich", using the "Edit location or description" icon 79a shown in Figure 7b and then saves this corrected location using the "Save" icon 79c shown in Figure 7c. As described previously, upon selecting the "Save" icon 79c the image is reprocessed by the image processing programme 24c. Consequently, the image will now appear as a result in any searches for "Greenwich". If any new images are identified, the image processing program 24c will deduct the total number relevant images identified from the number of images already being displayed to the user via the user interface 5 (step 300c). If this number is more than 0, the image search program 24g will communicate this to the user via a visual change to the updates icon 49 (step 300d), for example, a change in colour, presentation of a symbol or a number indicating the number of updates, as illustrated by Figure 5b. Alternatively, the user can select the update icon 49 such that the image processing program 24g repeats the additional search of Figure 3c and refreshes the list of results 51.

Once the user has been provided with a list of results 51, the user may select an individual image to view in more detail, as shown by Figure 6. Upon selection of the individual image, the user is presented with a full size version of the image 61. The user interface 6 upon which the full size image 61 is displayed may or may not include information regarding the user that uploaded the image 61. The full size image 61 includes a "Report Image" option 62 should they consider the image to be adverse or offensive, selection of which sends a message to the administrator informing them the image requires their attention and may need to be removed from the platform. Once the user has finished viewing the full size image 61, the user may click anywhere on the user interface 6, preferably, on the background 63 behind the full size image 61, to return to the search and view user interface 5 so that they may view other results 51, or start a new search. Alternatively, the user may be provided with a cancel icon (not shown) to close the full size image 61 and return to the search and view user interface 5.

Various modifications, whether by way of addition, deletion or substitution may be made to the above described embodiments to provide further embodiments, any and all of which are intended to be encompassed by the appended claims.

## Claims

1. An image processing method comprising the steps of:
receiving at least one image file from a client application;
analysing the at least one image file to determine whether the image includes at least one predetermined visual feature;
if the image includes the at least one predetermined visual feature, assigning the image file to a first group of images; and
if the image does not include the at least one predetermined visual feature, assigning the image file to a first group of images.

2. A method according to claim 1, wherein images assigned to the first group of images are accessible by a first group of client applications, and images assigned to the second group of images are accessible by the first group of clients and a second group of client applications.

3. A method according to claims 1 or 2, wherein the step of receiving comprises storing the at least one image file in a database.

4. A method according to and preceding claim, wherein the step of receiving further comprises receiving instructions from the client application to label the image file with at least one identifying term.

5. A method according to claim 4, wherein the identifying term is based on at least one of: the geographical location where the image was captured, the time at which the image was captured and the visual content of the image.

6. A method according to any preceding claim, wherein the step of analysing the at least one image file further comprises inputting the image file to a face detection application programming interface, API.

7. A method according to any preceding claim wherein the step of analysing the at least one image file further comprises extracting metadata information embedded in the image file.

8. A method according to claim 7, wherein the metadata information includes at least one of the geographical location where the image was captured and the time at which the image was captured.

9. A method according to any preceding claim, wherein the method further comprises the steps of:
receiving instructions from a client application of the second group of client applications to search the images that do not include the at least one predetermined visual feature, wherein the instructions comprise at least one search criterion; and
displaying at least one image to the client application of the second group of client applications based on the received instructions.

10. A method according to claim 9, wherein the search criterion includes at least one of: a geographical location, a time frame, an event and an object.

11. A method according to claims 9 or 10, wherein the method further comprises the step of displaying the at least one image to the client application of the second group of client applications in a chronological order.

12. A method according to claim 11, wherein the chronological order is based on the date and time at which the image was captured.

13. A non-transitory computer program product for a data-processing device, the computer program product comprising a set of instructions which, when loaded into the data-processing device, causes the device to perform the steps of the method of claims 1 to 12.

14. An image processing system, comprising:
at least one client application running on a data processing device;
a processor; and
a computer readable medium storing one or more instruction(s) arranged such that when executed the processor is caused to perform the method of claims 1 to 12.

15. A system according to claim 14, wherein the processor is further arranged such that analysis of at least one image is initiated in response to a request from a client application.
